# EUROPÄISCHE PATENTSCHRIFT

(11) **EP 2 933 361 B1**
(45) Veröffentlichungstag und Bekanntmachung des Hinweises auf die Patenterteilung: **04.09.2019**
(21) Anmeldenummer: 15000762.3
(22) Anmeldetag: 14.03.2015
(51) Int. Cl.: D01F 1/10, D21F 1/00

(54) **MONOFILAMENTE MIT HOHER ABRIEB- UND FORMBESTÄNDIGKEIT, GERINGER GLEITREIBUNG UND ANSCHMUTZNEIGUNG, TEXTILE FLÄCHENGEBILDE ENTHALTEND DIESE UND DEREN VERWENDUNG**
MONOFILAMENTS WITH HIGH ABRASION AND SHAPE STABILITY, LOW SLIDING FRICTION AND PROPENSITY TOWARDS SOILING, TEXTILE PLANAR STRUCTURES CONTAINING THE SAME, AND THE USE OF SAME
MONO-FILAMENTS AYANT UNE STABILITÉ DIMENSIONNELLE ET UNE RÉSISTANCE À L'USURE ÉLEVÉES, UN FAIBLE FROTTEMENT DE GLISSEMENT ET RÉSISTANT AUX TACHES, STRUCTURES PLATES EN TEXTILE LES COMPRENANT ET SON UTILISATION

(30) Priorität: 16.04.2014 DE 202014003285 U; 25.09.2014 DE 102014014479
(43) Veröffentlichungstag der Anmeldung: 21.10.2015
(73) Patentinhaber: Perlon Nextrusion Monofil GmbH, 86399 Bobingen (DE)
(72) Erfinder: Brüning, Hans-Joachim, 86179 Augsburg (DE); Büdenbender, Jürgen, 41539 Dormagen (DE); Heckenbenner, Pascal, 86199 Augsburg (DE)
(74) Vertreter: Ackermann, Joachim

(56) Entgegenhaltungen:
- WO-A1-2009/105083
- JP-A- 2001 146 627
- JP-A- 2008 025 059
- JP-A- 2009 228 177
- JP-A- 2011 202 298
- JP-A- 2012 180 625

## Beschreibung

Die vorliegende Erfindung betrifft Monofilamente, die sich zur Herstellung von textilen Flächengebilden einsetzen lassen, die insbesondere in Umgebungen mit hoher mechanischer Belastung zum Einsatz gelangen.

Die aus den erfindungsgemäßen Monofilamenten hergestellten textilen Flächengebilde lassen sich vorzugsweise als Rundsieb für poröse Papiermaschinenbespannungen einsetzen. Diese kommen besonders bevorzugt in der Blattbildungs- und Trockenpartie von Papiermaschinen zum Einsatz.

Die Unterschicht von in der Blattbildungspartie von Papiermaschinen eingesetzten Formingsieben ist wegen der in dieser Partie herrschenden Druckverhältnisse (Saugboxen) erhöhtem Verschleiß ausgesetzt. Deshalb werden auf der Unterseite dieser Siebe bislang wechselweise Monofilamente aus Polyethylenterephthalat (nachstehend auch "PET" genannt) und aus Polyamid eingesetzt. Diese Kombination hat sich im Vergleich mit reinem PET als abriebbeständiger erwiesen.

Es wurde nun gefunden, dass sich der Zusatz von Silikonkügelchen zum Grundpolymer hervorragend dazu eignet, sowohl in der Kette als auch im Schuss von PMC Formier- und Trockensieben die Reibung sowie die Schmutzabweisung dieser Siebe nennenswert zu verringern. Dadurch kann insbesondere in der Trockenpartie der bisherige Zusatz von vergleichsweise teuren Fluorpolymeren zum Grundpolymer vermieden werden. Überraschenderweise wird durch den Zusatz von Silikonpolymer die Hydrolysebeständigkeit des Grundpolymers nicht negativ beeinflusst.

In DE 69609709T2 wird in einer Aufzählung von möglichen Zusätzen erwähnt, dass man in Monofilamenten Polysiloxane einsetzen kann. Auch der Zusatz von Polysiloxanen zu Monofilamenten für Papiermaschinensiebe ist in DE 10 2004 054 804 A1 und DE 10 2005 044 435 A1 bereits genannt.

Aus der JP 2012-180625 A sind Monofilamente bekannt, die sphärische Teilchen aus vernetzten Silikonen enthalten können. Der Einsatz von Teilchen aus Silsequioxanen wird nicht offenbart.

In der JP 2008-025059 A werden Fasern aus Polymilchsäure beschrieben, die Silikonpulver enthalten, darunter auch Silsesquioxane. Fasern enthaltend Polyethylenterephthalate, Polybutylenterephthalate oder Polyamide werden nicht beschrieben.

Aufgabe dieser Erfindung ist die Bereitstellung einer Materialkombination, die einerseits einen sehr geringen Gleitwiderstand und damit eine geringe Antriebsleistung der Maschine ermöglicht, und andererseits eine geringe Anschmutzneigung aufweist.

Gelöst wird diese Aufgabe durch die Bereitstellung von Monofilamenten, die aus einer Mischung ausgewählter Komponenten hergestellt worden sind.

Die vorliegende Erfindung betrifft Monofilamente enthaltend eine Matrix aus thermoplastischem Polymer ausgewählt aus der Gruppe der Polyethylenterephthalathomo- oder -copolymeren, der Polybutylenterephthalathomo- oder -copolymeren oder der Polyamide und darin verteilt Teilchen aus Silsequioxan, die einen Durchmesser von 10 nm bis 200 µm aufweisen.

Die Silsesquioxanteilchen können beliebige Gestalt aufweisen. Beispiele dafür sind Teilen mit rotationssymmetrischer Gestalt, insbesondere Sphären, aber auch mit irregulärer Gestalt. Diese Teilchen liegen als Mikropulver vor. Der Durchmesser dieser Teilchen bewegt sich im Bereich von 10 nm bis 200 µm, vorzugsweise von 0,2 bis 50 µm vor. Die Durchmesserangabe bezieht sich bei Teilchen mit variierenden Durchmessern auf den größten Durchmesser des Teilchens.

Bevorzugt werden Monofilamente enthalten sphärische Teilchen aus Silsesquioxan, deren Durchmesser von 0,2 bis 50 µm beträgt.

Das Silsesquioxan liegt als Mikropulver in dem Matrixpolymeren dispergiert vor. Es wird im Allgemeinen zu 0,001 Gew. % bis 8 Gew %, bevorzugt 0,02 Gew. % bis 5 Gew. % dem Matrixpolymer zudosiert. Die Teilchen liegen im Matrixpolymer als heterogene Phase vor. Die Teilchen können als einzelne Teilchen im Matrixpolymer vorliegen und/oder als Aggregate verschiedener Einzelteilchen.

Die Menge der Teilchen im Monofilament kann in weiten Bereichen variieren. Typischerweise beträgt die Menge der Teilchen im Monofilament 0,01 bis 8 Gew. %, bevorzugt 0,1 bis 5 Gew. %, bezogen auf die Masse des Monofilaments.

Bei den erfindungsgemäß verwendeten Polysiloxanen handelt es sich um eine Gruppe synthetischer Polymere, bei denen Siliziumatome über Sauerstoffatome verknüpft sind. Die erfindungsgemäß eingesetzten Silsequioxane werden auch Silikone genannt. Dabei handelt es sich um Polysiloxane mit Käfigstruktur, sogenannte Silsesquioxane.

Bevorzugt werden Silsesquioxane der Formel R¹SiO_{3/2} eingesetzt, worin R¹ C₁-C₆-Alkyl, insbesondere Methyl ist.

Ganz besonders bevorzugt sind Monofilamente, welche ein Polymethylsilsesquioxan enthalten.

Als thermoplastisches Matrixpolymer können die oben genannten verspinnbaren thermoplastischen Polymere ausgewählt werden. Beispiele für Matrixpolymere sind thermoplastische Polymere aus dieser Gruppe der Polyester, Polyamide oder einer Kombination von zweien oder mehreren davon.

Bevorzugt werden als Matrixpolymere Polyethylenterephthalat, Polybutylenterephthalat, mit Dicarbonsäure modifiziertes Polyethylenterephthalat, mit Dicarbonsäure modifiziertes Polybutylenterephthalat oder Kombinationen von zwei oder mehreren davon verwendet.

Als Polyester kommen Polyethylenterephthalat- oder Polybutylenterephthalat-Homopolymere oder Polyethylenterephthalat- oder Polybutylenterephthalat-Einheiten enthaltende Copolymere zum Einsatz. Diese Polymeren leiten sich also ab von Ethylenglykol und/oder von Butylenglykol sowie von Terephthalsäure oder deren polyesterbildenden Derivaten, wie den Dicarbonsäureestern oder -chloriden und gegebenenfalls weiteren Dicarbonsäuren oder deren polyesterbildenden Derivaten.

Diese thermoplastischen Polyester sind an sich bekannt. Bausteine von thermoplastischen Copolyestern a) sind das oben genannte Ethylenglykol oder Butylenglykol sowie die oben genannten Dicarbonsäuren bzw. entsprechend aufgebaute polyesterbildende Derivate. Hauptsäurebestandteil der Polyester der Matrixkomponente sind neben Terephthalsäure, Ethylenglykol und/oder Butylenglykol, gegebenenfalls zusammen mit geringeren Anteilen, vorzugsweise bis zu 30 Mol %, bezogen auf die Gesamtmenge der Dicarbonsäuren, anderer aromatischer und/oder aliphatischer und/oder cycloaliphatischer Dicarbonsäuren, vorzugsweise mit aromatischen Verbindungen, wie z.B. Phthalsäure, 4,4'-Biphenyldicarbonsäure oder insbesondere Isophthalsäure und/oder mit aliphatischen Dicarbonsäuren, wie z.B. mit Adipinsäure oder Sebacinsäure.

Zusätzlich zum Ethylenglykol oder zum Butylenglykol (1,4-Butandiol) können geringe Mengen, beispielsweise bis zu 30 Mol %, bezogen auf die Gesamtmenge der Alkohole, an geeigneten zweiwertigen Alkoholen eingesetzt werden. Typische Vertreter davon sind aliphatische und/oder cycloaliphatische Diole, beispielsweise Propandiol, Cyclohexandimethanol oder deren Gemische.

Beispiele für bevorzugte Matrixpolymere sind Copolyester, die neben Polyterephthalat-Einheiten weitere Einheiten aufweisen, die sich von Alkylenglykolen, insbesondere Ethylenglykol, und aliphatischen und/oder aromatischen Dicarbonsäuren, wie Adipinsäure, Sebacinsäure, Terephthalsäure oder Isophthalsäure, ableiten.

Bevorzugt eingesetzte Matrixpolymere sind Polyethylenterephthalat oder ein mit Dicarbonsäure modifiziertes Polyethylenterephthalat, insbesondere ein mit aromatischer Dicarbonsäure modifiziertes Polyethylenterephthalat oder ein mit aliphatischer Dicarbonsäure modifiziertes Polyethylenterephthalat.

Ganz besonders bevorzugt eingesetzte Matrixpolymere sind mit aromatischer Dicarbonsäure modifiziertes Polyethylenterephthalat, insbesondere mit Isophthalsäure modifiziertes Polyethylenterephthalat oder mit Phthalsäure modifiziertes Polyethylenterephthalat.

Ebenfalls ganz besonders bevorzugt eingesetzte Matrixpolymere sind mit aliphatischer Dicarbonsäure modifiziertes Polyethylenterephthalat, insbesonder ein mit Adipinsäure modifiziertes Polyethylenterephthalat oder ein mit Sebazinsäure modifiziertes Polyethylenterephthalat.

Die erfindungsgemäß eingesetzten Matrixpolyester weisen üblicherweise Lösungsviskositäten (IV-Werte) von mindestens 0,60 dl/g, vorzugsweise von 0,60 bis 1,05 dl/g, besonders bevorzugt von 0,62 - 0,93 dl/g, auf (gemessen bei 25°C in Dichloressigsäure (DCE)).

Eine weitere Gruppe bevorzugt eingesetzter Matrixpolymere sind Polyamide, insbesondere solche, die sich von aliphatischen Dicarbonsäuren oder deren polyamidbildenden Derivaten und von aliphatischen Diaminen oder von aliphatischen Aminocarbonsäuren oder aliphatischen Lactamen ableiten.

Besonders bevorzugte Polyamide sind Polyamid 6, Polyamid 6.6, Polyamid 6.10, Polyamid 12 und Polyamid 6.12.

Bevorzugte erfindungsgemäße Monofilamente sind durch Carbodiimid stabilisiert. Dieses wird der verspinnbaren Masse zugesetzt. Besonders bevorzugt werden Polyester-Monofilamente durch Carbodiimid-Zusatz stabilisiert.

Bevorzugt sind Polyester-Monofilamente mit einem Gehalt an freien Carboxylgruppen von kleiner gleich 10 mval/kg, vorzugsweise kleiner gleich 5 mval/kg.

Dieses kann durch Zusatz von Carbodiimid erreicht werden, das ein Mittel zum Verschluss von freien Carboxylgruppen darstellt.

Derartig ausgerüstete Polyester-Monofilamente sind gegenüber hydrolytischem Abbau besonders gut stabilisiert und eignen sich insbesondere zum Einsatz in feucht-heißen Umgebungen, z.B. in Papiermaschinen oder als Filter.

Ganz besonders bevorzugt werden polymere Carbodiimide als Stabilisatoren eingesetzt.

Carbodiimide werden unter dem Handelsnamen Stabaxol® (Rheinchemie) vermarktet.

Die Mengen der einzelnen Bestandteile in den erfindungsgemäßen Monofilamenten können in weiten Bereichen schwanken und werden vom Fachmann nach dem gewünschten Eigenschaftsprofil ausgewählt.

Bevorzugt werden Monofilamente, bei denen der Anteil an thermoplastischem Polymer 60 bis 95 Gew. % beträgt, der Anteil an Silsequioxan 0,02 bis 8 Gew. % und der Anteil an Carbodiimid 0 bis 10 Gew. %, wobei die Mengenangaben auf die Gesamtmenge des Monofilaments bezogen sind.

Die erfindungsgemäß eingesetzte Kombination von thermoplastischem Matrixpolymer und Silsequioxanteilchen verleiht den Monofilamenten neben einer geringen Gleitreibung und Anschmutzneigung gute textiltechnologische Eigenschaften, insbesondere eine hohe Formbeständigkeit und kombiniert mit Carbodiimiden auch eine ausgezeichnete Hydrolysebeständigkeit. Auf die in der Trockenpartie häufig eingesetzten Fluorpolymere zur Verringerung der Anschmutzneigung kann hier verzichtet werden, obgleich deren Einsatz nicht ausgeschlossen ist.

Die Auswahl der im Einzelfall eingesetzten Komponenten erfolgt durch den Fachmann. So sind die Komponenten für das erfindungsgemäße Monofilament so zu wählen, dass deren Verarbeitung bei Temperaturen erfolgen kann, bei denen keine der Komponenten einer nennenswerten Zersetzung unterliegt.

Das erfindungsgemäße Polyester-Monofilament kann neben den oben beschriebenen Komponenten zusätzlich weitere und übliche Zusätze enthalten. Die Menge an solchen Zusätzen beträgt typischerweise 0,001 bis 10 Gew. %, bezogen auf die Gesamtmasse des Monofilaments.

Beispiele für übliche Zusätze sind Antioxidantien, UV-Stabilisatoren, Füllstoffe, Pigmente, Biozide, Zusätze zur Erhöhung der elektrischen Leitfähigkeit, Zusätze zur Erhöhung der Abriebbeständigkeit, reibungsver-mindernde Zusätze, Avivagen, Verarbeitungshilfsmittel, Weichmacher, Gleitmittel, Mattierungsmittel, Viskositätsmodifizierer, Kristallisationbeschleuniger oder Kombinationen von zwei oder mehreren davon.

Die zur Herstellung der erfindungsgemäßen Monofilamente benötigten Komponenten sind an sich bekannt, teilweise kommerziell erhältlich oder können nach an sich bekannten Verfahren hergestellt werden.

Der Titer der erfindungsgemäßen Monofilamente kann in weiten Bereichen schwanken. Beispiele dafür sind 50 bis 45.000 dtex, insbesondere 100 bis 5.000 dtex.

Die Querschnittsform der erfindungsgemäßen Monofilamente kann beliebig sein, beispielsweise rund, oval oder n-eckig, wobei n größer gleich 3 ist.

Die erfindungsgemäßen Monofilamente können nach an sich bekannten Verfahren hergestellt werden.

Ein typisches Herstellverfahren umfasst die Maßnahmen:
i) Vermischen von Matrixpolymer und Silsequioxanteilchen oder von Matrixpolymer und einem Masterbatch enthaltend Silsesquioxanteilchen in einem Extruder,
ii) Extrudieren des Gemisches aus Schritt i) durch eine Spinndüse,
iii) Abziehen des gebildeten Monofilaments,
iv) gegebenenfalls Verstrecken und/oder Relaxieren des Monofilaments, und
v) Aufspulen des Monofilaments.

Eine oder mehrere der Komponenten des erfindungsgemäßen Monofilaments können auch in Form eines Masterbatches eingesetzt werden. So lässt sich insbesondere das Carbodiimid als Masterbatch in Polyester gut dosieren und in das Matrixpolymere einmischen. Auch die Silsesquioxanteilchen können in der Form eines Masterbatches in das Matrixpolymer eingearbeitet werden.

Die erfindungsgemäßen Monofilamente werden bei der Herstellung ein- oder mehrfach verstreckt.

Besonders bevorzugt wird zur Herstellung der Monofilamente als Matrixpolymer ein durch Festphasenkondensation hergestellter Polyesterrohstoff eingesetzt.

Nach dem Aufschmelzen und Verpressen der Polymerschmelze durch eine Spinndüse wird der heiße Polymerfaden abgekühlt, vorzugsweise in einem Wasserbad, und anschließend ein- oder mehrfach verstreckt, gegebenenfalls fixiert und aufgespult, wie es aus dem Stand der Technik für die genannten schmelzspinnbaren Polymeren bekannt ist.

Bevorzugt werden die erfindungsgemäßen Monofilamente zur Herstellung von textilen Flächenkonstruktionen, insbesondere von Geweben, Spiralgeweben, Gelegen oder Gestricken, eingesetzt. Diese textilen Flächenkonstruktionen werden vorzugsweise in Sieben eingesetzt.

Die Erfindung betrifft daher auch ein textiles Flächengebilde enthaltend die oben beschriebenen Monofilamente, insbesondere textile Flächengebilde in Form eines Gewebes, Gestricks, Gewirkes, Geflechts oder Geleges.

Die erfindungsgemäßen Monofilamente lassen sich auf allen industriellen Gebieten einsetzen. Bevorzugt kommen sie bei Anwendungen zum Einsatz, in denen mit einem erhöhten Verschleiß sowie mit hoher mechanischer Belastung insbesondere in feucht-heißen Umgebungen zu rechnen ist. Beispiele dafür sind der Einsatz in Siebgeweben und Filtertüchern für Gas- und Flüssigkeitsfilter, in Trockenbändern, beispielsweise zur Herstellung von Lebensmitteln oder insbesondere von Papier.

Die Erfindung betrifft auch die Verwendung der oben beschriebenen Monofilamente als Papiermaschinenbespannung, in Förderbändern und in Filtrationssieben.

Ganz besonders bevorzugt werden die erfindungsgemäßen Monofilamente als Papiermaschinenbespannung in der Blattbildungspartie und/oder in der Trockenpartie der Papiermaschine eingesetzt.

Eingesetzt werden diese Monofilamente beispielsweise im Unterschuss von Formiersieben in Papiermaschinen. Dies kann zu 100 % als Unterschuss oder als sogenannter Wechselschuss (abwechselnd das genannte Monofilament im Wechsel mit z.B. Polyamid-Monofilamenten) erfolgen. Durch den Zusatz von Polymethylsilsequioxan (PMSQ) wird die Gleitreibung deutlich herabgesetzt und damit die Antriebsleistung der Papier-maschine signifikant verringert, was eine bedeutende Energieersparnis zur Folge hat. Weiter ist das erfindungsgemäße Monofilament abriebbeständiger als vergleichbare Monofilamente aus Polyethylenterephthalat oder Polyamiden ohne Polysiloxan-Zusatz.

In einer weiteren bevorzugten Ausführungsform wird einer Dispersion aus Matrixpolymer und PMSQ, noch Carbodiimid als Hydrolysestabilisator zugesetzt. Dadurch ist diese Variante besonders für Trocknungsprozesse in feuchter Umgebung geeignet, z.B. in der Trockenpartie von Papiermaschinen sowie in anderen kontinuierlich laufenden industriellen Trocknungs-und Filtrationspozessen.

Durch das PMSQ wird die Restfestigkeit vergleichbarer hydrolyse-stabilisierter Polyethylenterephthalat-Typen nicht herabgesetzt. Ein weiterer positiver Nebeneffekt ist die geringe Anschmutzung des Mono-filaments bzw. des Gewebes wegen der Hydrophobie des PMSQ.

Die vorliegende Erfindung wird durch die folgenden Beispiele ausführlicher beschrieben. Diese Beispiele dienen nur zur Erläuterung der Erfindung und sind nicht als Einschränkung zu verstehen.

### Beispiel 1 (Vergleich)

Matrixpolymer ist ein kommerziell erhältliches Polyethylenterephtalat - Type AD01 der DuFor Resins B.V., Zevenaar/NL. Als Polysiloxandispersion wurden 2,5 Gew. % thermoplastische Kügelchen - Type MB 50-010 von Dow Corning S.A., Seneffe/B - zudosiert und anschließend noch 2,5 Gew. % Renol Weiß ATX 406 von Clariant Masterbatches, Lahnstein/D hinzugefügt.

Die drei Komponenten wurden vor der Extrusion vermischt, anschließend extrudiert, versponnen, mehrfach unter Temperatureinwirkung verstreckt und aufgespult.

Das so erhaltene Monofilament mit einem nominellen Durchmesser von 1,28 mm hatte folgende Textilwerte:

| | |
|---|---|
| Durchmesser: | 1,294 mm |
| Titer: | 17455 dtex |
| freier Thermoschrumpf 180°: | 21,8 % |
| Festigkeit linear: | 33,8 cN/tex |
| Knotenfestigkeit: | 29,1 cN/tex |
| Schlingenfestigkeit: | 32,4 cN/tex |
| Bruchdehnung: | 28,4 %. |

Entscheidend ist die erhaltene Oberflächenstruktur. Hier treten die Kugelkalotten der Silikondispersion deutlich aus der Oberfläche hervor. Sie verleihen dem Monofilament die gewünschten Eigenschaften, nämlich einen sehr geringen Gleitwiderstand und eine geringe Anschmutzneigung.

### Beispiel 2 (Vergleich)

Es wurden 98,5 Gew. % eines kommerziell erhältlichen Polyamids PA 6 - Type Akulon F 136-C1 von DSM - eingesetzt. Dazu wurde 1,5 Gew. % an thermoplastischen Polysiloxankügelchen - Type Pellet S von Wacker Chemie - dosiert.

Die beiden Komponenten wurden vor der Extrusion vermischt, anschließend extrudiert, versponnen, mehrfach unter Temperatureinwirkung verstreckt und aufgespult.

Fahrdaten und Eigenschaften des erhaltenen Monofilaments sind in den folgenden Tabellen 1, 2 und 3 aufgeführt.

### Beispiel 3

Es wurde wie in Beispiel 2 verfahren. Als Matrixpolymer wurden 99,0 Gew. % eines kommerziell erhältlichen Polyamids PA 6 - Type Akulon F 136-C1 von DSM - eingesetzt. Als Polysiloxankügelchen wurde 1,0 Gew. % an PMSQ - Type PMSQ E +580 von Coating Products - eingesetzt. Der mittlere Durchmesser der Polysiloxankügelchen betrug 8 µm.

Fahrdaten und Eigenschaften des erhaltenen Monofilaments sind in den folgenden Tabellen 1, 2 und 3 aufgeführt.

### Beispiel 4

Es wurde wie in Beispiel 2 verfahren. Als Matrixpolymer wurden 99,0 Gew. % eines kommerziell erhältlichen Polyethylenterephthalats - Type RT 52 von Invista - eingesetzt. Als Silikonkügelchen wurde 1,0 Gew. % an PMSQ - Type PMSQ E +580 von Coating Products - eingesetzt.

Fahrdaten und Eigenschaften des erhaltenen Monofilaments sind in den folgenden Tabellen 1, 2 und 3 aufgeführt.

### Beispiel 5

Es wurde wie in Beispiel 4 verfahren. Als Matrixpolymer wurden 97,5 Gew. % eines kommerziell erhältlichen Polyethylenterephthalats - Type RT 52 von Invista - eingesetzt. Als Silikonkügelchen wurde 2,5 Gew. % an PMSQ - Type MB50-010 von Dow Corning - eingesetzt.

Fahrdaten und Eigenschaften des erhaltenen Monofilaments sind in den folgenden Tabellen 1, 2 und 3 aufgeführt.

### Beispiel 6 (Vergleich)

Es wurde wie in Beispiel 4 verfahren. Als Matrixpolymer wurden 99,0 Gew. % eines kommerziell erhältlichen Polyethylenterephthalats - Type RT 52 von Invista - eingesetzt. Als Silikonkügelchen wurde 2,5 Gew. % an thermoplastischen Silikonkügelchen - Type Pellet S von Wacker Chemie - eingesetzt.

Fahrdaten und Eigenschaften des erhaltenen Monofilaments sind in den folgenden Tabellen 1, 2 und 3 aufgeführt.

### Beispiel 7

Es wurde wie in Beispiel 4 verfahren. Als Matrixpolymer wurden 93,3 Gew. % eines kommerziell erhältlichen Polyethylenterephthalats - Type RT 12 von Invista - eingesetzt. Als Silikonkügelchen wurde 1,0 Gew. % an PMSQ - Type PMSQ E +580 von Coating Products - eingesetzt. Außerdem wurden 5,0 Gew. % eines Masterbatches aus aromatischem Polycarbodiimid in PET (Stabaxol® KE 9428 von Rheinchemie) und 0,7 Gew. % eines substituierten Diarylcarbodiimids (Stabaxol® ILF von Rheinchemie) eingesetzt.

Fahrdaten und Eigenschaften des erhaltenen Monofilaments sind in den folgenden Tabellen 1, 2 und 3 aufgeführt.

### Vergleichsbeispiel V1

Es wurde wie in Beispiel 2 verfahren. Als Matrixpolymer wurden 100 Gew. % eines kommerziell erhältlichen Polyamids PA 6 - Type Akulon F 136-C1 von DSM - eingesetzt. Es wurden keine thermoplastischen Silikonkügelchen dosiert.

Fahrdaten und Eigenschaften des erhaltenen Monofilaments sind in den folgenden Tabellen 1, 2 und 3 aufgeführt.

### Vergleichsbeispiel V2

Es wurde wie in Beispiel 4 verfahren. Als Matrixpolymer wurden 100 Gew. % eines kommerziell erhältlichen Polyethylenterephthalats - Type RT 52 von Invista - eingesetzt. Es wurden keine thermoplastischen Silikonkügelchen dosiert.

### Vergleichsbeispiel V3

Es wurde wie in Beispiel 7 verfahren. Als Matrixpolymer wurden 94,3 Gew. % eines kommerziell erhältlichen Polyethylenterephthalats - Type RT 12 von Invista - eingesetzt. Es wurden keine thermoplastischen Silikonkügelchen dosiert. Art und Menge der Carbodiimid-Stabilisatoren entsprachen Beispiel 7.

Eigenschaften des erhaltenen Monofilaments sind in der folgenden Tabelle 3 aufgeführt.

In der folgenden Tabelle 1 sind die Fahrdaten für die Monofile aus einigen der oben beschriebenen Beispiele aufgeführt:

**Tabelle 1**

| Beispiel Nr. | V1 | 2 | 3 | V2 | 4 | 5 | 6 | 7 |
|---|---|---|---|---|---|---|---|---|
| Extruder Zone 1 (°C) | 261 | 261 | 261 | 278 | 278 | 278 | 278 | 290 |
| Extruder Zone 2 (°C) | 270 | 270 | 270 | 287 | 287 | 287 | 287 | 291 |
| Extruder Zone 3 (°C) | 269 | 269 | 269 | 291 | 291 | 291 | 291 | 285 |
| Extruder Zone 4 (°C) | 270 | 270 | 270 | 293 | 293 | 293 | 293 | 280 |
| Extruder Flansch (°C) | 267 | 267 | 267 | 271 | 271 | 271 | 271 | |
| Massetemperat ur (°C) | 282 | 282 | 282 | 297 | 297 | 297 | 297 | 280 |
| Extruder Drehzahl (U/min) | 87,7 | 87,7 | 87,7 | 69,0 | 69,0 | 69,0 | 69,0 | 58,6 |
| Extruderdruck (bar) | 97 | 97 | 97 | 94 | 94 | 94 | 94 | 93 |
| Spinnpumpe Drehzahl (U/min) | 28,6 | 28,6 | 28,6 | 21,9 | 21,6 | 21,9 | 21,9 | |
| Spinnkopf Schmelze (°C) | 281 | 281 | 281 | 291 | 291 | 291 | 291 | 282 |
| Spinnwanne Temperatur (°C) | 20 | 20 | 20 | 67 | 67 | 67 | 67 | 70 |
| Streckwerk 1 (m/min) | 43,5 | 43,5 | 43,5 | 35,8 | 35,8 | 35,8 | 35,8 | 17,6 |
| Streckwerk 2 (m/min) | 141,9 | 141,9 | 141,9 | 139,8 | 139,8 | 139,8 | 139,8 | 68,4 |
| Streckwerk 3 (m/min) | 180,9 | 180,9 | 180,9 | 196,8 | 196,8 | 196,8 | 196,8 | 99,5 |
| Streckwerk 4 (m/min) | 170,1 | 170,1 | 170,1 | 170,1 | 170,1 | 170,1 | 170,1 | 79,9 |
| Fixierkanal (°C) | 225 | 225 | 225 | 195 | 195 | 195 | 195 | 235 |

In der folgenden Tabelle 2 sind einige Textilwerte für die Monofile aus einigen der oben beschriebenen Beispiele aufgeführt:

**Tabelle 2**

| Beispiel Nr. | 2 | 3 | 4 | 5 | 6 | 7 |
|---|---|---|---|---|---|---|
| Titer (dtex) | 800 | 804 | 977 | 973 | 975 | 5304 |
| freier Thermoschrumpf 180° (%) | 10,5 | 10,5 | 10,1 | 10,9 | 10,5 | 3,8 |
| Höchstzugkraft (N) | 40,2 | 44,6 | 41,4 | 43,8 | 41,8 | 195,6 |
| spez. Festigkeit (cN/tex) | 50,3 | 55,5 | 42,4 | 45,1 | 42,9 | 36,9 |
| Bezugsdehnung bei 27 cN/tex (%) | 10,6 | 9,8 | 14,6 | 14,6 | 15,0 | 23,5 |
| Bruchdehnung (%) | 31,8 | 27,9 | 25,5 | 29,6 | 26,1 | 35,2 |
| Durchmesser (µm) | 294 | 300 | 300 | 303 | 301 | 709 |

In der folgenden Tabelle 3 sind die Reibungskoeffizienten für die Monofile aus einigen der oben beschriebenen Beispiele aufgeführt:

**Tabelle 3**

| Beispiel Nr. | V1 | 2 | 3 | V2 | 4 | 5 | 6 | V3 | 7 |
|---|---|---|---|---|---|---|---|---|---|
| Monofil gegen Metall, trocken | 0,287 | 0,256 | 0,257 | 0,392 | 0,222 | 0,246 | 0,260 | 0,390 | 0,250 |
| Monofil gegen Keramik, nass | 0,302 | 0,234 | 0,300 | 0,315 | 0,287 | 0,263 | 0,253 | 0,317 | 0,258 |

## Patentansprüche

1. Monofilamente enthaltend eine Matrix aus thermoplastischem Polymer ausgewählt aus der Gruppe der Polyethylenterephthalathomo- oder -copolymeren, der Polybutylenterephthalathomo- oder -copolymeren oder der Polyamide und darin verteilt Teilchen aus Silsesquioxan, die einen Durchmesser von 10 nm bis 200 µm aufweisen.

2. Monofilamente nach Anspruch 1, **dadurch gekennzeichnet, dass** die Teilchen aus Silsesquioxan sphärisch sind und einen Durchmesser von 0,2 bis 50 µm aufweisen.

3. Monofilamente nach einem der Ansprüche 1 oder 2, **dadurch gekennzeichnet, dass** die Menge der Teilchen im Monofilament 0,01 bis 8 Gew. % beträgt.

4. Monofilamente nach einem der Ansprüche 1 bis 3, **dadurch gekennzeichnet, dass** das Silsesquioxan eine Verbindung der Formel R¹SiO_{3/2} ist, worin R¹ C₁-C₆-Alkyl, insbesondere Methyl ist.

5. Monofilamente nach Anspruch 4, **dadurch gekennzeichnet, dass** das Silsesquioxan ein Polymethylsilsesquioxan ist.

6. Monofilamente nach einem der Ansprüche 1 bis 5, **dadurch gekennzeichnet, dass** das thermoplastische Polymer ein Polyethylenterephthalat, Polybutylenterephthalat, ein mit Dicarbonsäure modifiziertes Polyethylenterephthalat, ein mit Dicarbonsäure modifiziertes Polybutylenterephthalat, ein Polyamid 6, ein Polyamid 6.6, ein Polyamid 6.10, ein Polyamid 12, ein Polyamid 6.12 oder Kombinationen von zwei oder mehreren davon bedeutet.

7. Monofilamente nach einem der Ansprüche 1 bis 6, **dadurch gekennzeichnet, dass** dieses zusätzlich einen Carbodiimid-Stabilisator, vorzugsweise einen polymeren Carbodiimid-Stabilisator, enthält.

8. Monofilamente nach einem der Ansprüche 1 bis 7, **dadurch gekennzeichnet, dass** der Anteil an thermoplastischem Polymer 60 bis 95 Gew. % beträgt, der Anteil an Silsesquioxan 0,02 bis 8 Gew. % und der Anteil an Carbodiimid 0 bis 10 Gew. %, wobei die Mengenangaben auf die Gesamtmenge des Monofilaments bezogen sind.

9. Monofilament nach mindestens einem der Ansprüche 1 bis 8, **dadurch gekennzeichnet, dass** das Monofilament zusätzlich 0,001 bis 10 Gew. % an üblichen Zusätzen enthält, insbesondere Antioxidantien, UV-Stabilisatoren, Füllstoffe, Pigmente, Biozide, Zusätze zur Erhöhung der elektrischen Leitfähigkeit, Zusätze zur Erhöhung der Abriebbeständigkeit, reibungsvermindernde Zusätze, Avivagen, Verarbeitungshilfsmittel, Weichmacher, Gleitmittel, Mattierungsmittel, Viskositätsmodifizierer, Kristallisationbeschleuniger oder Kombinationen von zwei oder mehreren dieser Zusätze.

10. Textiles Flächengebilde enthaltend Monofilamente nach mindestens einem der Ansprüche 1 bis 9, insbesondere in Form eines Gewebes, Gestricks, Gewirkes, Geflechts oder Geleges.

11. Verwendung der Monofilamente nach mindestens einem der Ansprüche 1 bis 9 als Papiermaschinenbespannung, in Förderbändern und in Filtrationssieben.

12. Verwendung nach Anspruch 11, **dadurch gekennzeichnet, dass** die Papiermaschinenbespannung in der Blattbildungspartie und/oder in der Trockenpartie der Papiermaschine eingesetzt wird.

## Claims

1. A monofilament comprising a matrix of thermoplastic polymer selected from the group comprising polyethylene terephthalate homo- or -copolymers, polybutylene terephthalate homo- or -copolymers or the polyamides and dispersed therein particles of silsesquioxane which are from 10 nm to 200 µm in diameter.

2. The monofilament as claimed in claim 1, wherein the particles of silsesquioxane are spherical and from 0.2 to 50 µm in diameter.

3. The monofilament as claimed in either of claims 1 and 2, wherein the particles are present in the monofilament at from 0.01 to 8 wt%.

4. The monofilament as claimed in any of claims 1 to 3, wherein the silsesquioxane is a compound of the formula R¹SiO_{3/2}, where R¹ is C₁-C₆-alkyl, in particular methyl.

5. The monofilament as claimed in claim 4 wherein the silsesquioxane is a polymethylsilsesquioxane.

6. The monofilament as claimed in any of claims 1 to 5, wherein the thermoplastic polymer is a polyethylene terephthalate, a polybutylene terephthalate, a dicarboxylic acid-modified polyethylene terephthalate, a dicarboxylic acid-modified polybutylene terephthalate, a polyamide-6, a polyamide-6.6, a polyamdie-6.10, a polyamide-12, a polyamide-6.12 or a combination of two or more thereof.

7. The monofilament as claimed in any of claims 1 to 6, further comprising a carbodiimide stabilizer, preferably a polymeric carbodiimide stabilizer.

8. The monofilament as claimed in any of claims 1 to 8, wherein the proportion of thermoplastic polymer is from 60 to 95 wt%, the proportion of silsesquioxane is from 0.02 to 8 wt% and the proportion of carbodiimide is from 0 to 10 wt%, wherein the quantitative particulars are based on the overall amount of the monofilament.

9. The monofilament as claimed in one or more of claims 1 to 8, further comprising from 0.001 to 10 wt% of customary additives, in particular antioxidants, UV stabilizers, fillers, pigments, biocides, electroconductivity enhancers, abrasion resistance enhancers, friction-reducing additives, spin finishes, processing aids, plasticizers, lubricants, delusterants, viscosity modifiers, crystallization accelerants or combinations of two or more thereof.

10. A textile fabric comprising monofilaments as claimed in one or more of claims 1 to 9, in particular a woven fabric, a knitted fabric, a stitch bonded fabric, a braided fabric or a scrim.

11. Use of the monofilament as claimed in one or more of claims 1 to 9 as papermachine clothing, in conveyor belts and in filtration screens.

12. The use as claimed in claim 12, wherein the papermachine clothing is used in the forming section and/or in the drying section of the papermachine.

## Revendications

1. Monofilaments contenant une matrice de polymère thermoplastique choisi dans le groupe constitué par les homo- ou copolymères de polyéthylène téréphtalate, les homo- ou copolymères de polybutylène téréphtalate ou les polyamides et des particules de silsesquioxane ayant un diamètre de 10 nm à 200 µm réparties dans celle-ci.

2. Monofilaments selon la revendication 1, **caractérisés en ce que** les particules de silsesquioxane sont sphériques et présentent un diamètre de 0,2 à 50 µm.

3. Monofilaments selon l'une des revendications 1 ou 2, **caractérisés en ce que** la quantité de particules dans le monofilament est de 0,01 à 8 % en poids.

4. Monofilaments selon l'une des revendications 1 à 3, **caractérisés en ce que** le silsesquioxane est un composé de formule R¹SiO_{3/2}, dans laquelle R¹ est un alkyle en C₁-C₆, en particulier du méthyle.

5. Monofilaments selon la revendication 4, **caractérisés en ce que** le silsesquioxane est un polyméthylsilsesquioxane.

6. Monofilaments selon l'une des revendications 1 à 5, **caractérisés en ce que** le polymère thermoplastique représente un polyéthylène téréphtalate, un polybutylène téréphtalate, un polyéthylène téréphtalate modifié par un acide dicarboxylique, un polybutylène téréphtalate modifié par un acide dicarboxylique, un polyamide 6, un polyamide 6.6, un polyamide 6.10, un polyamide 12, un polyamide 6.12 ou des combinaisons de deux ou plusieurs de ceux-ci.

7. Monofilaments selon l'une des revendications 1 à 6, **caractérisés en ce qu'**ils contiennent en outre un stabilisant carbodiimide, de préférence un stabilisant carbodiimide polymère.

8. Monofilaments selon l'une des revendications 1 à 7, **caractérisés en ce que** la proportion de polymère thermoplastique est de 60 à 95 % en poids, la proportion de silsesquioxane de 0,02 à 8 % en poids et la proportion de carbodiimide de 0 à 10 % en poids, les quantités étant rapportées au montant total du monofilament.

9. Monofilament selon au moins l'une des revendications 1 à 8, **caractérisé en ce que** le monofilament contient en outre de 0,001 à 10 % en poids d'additifs habituels, en particulier des antioxydants, des stabilisateurs UV, des charges, des pigments, des biocides, des additifs pour augmenter la conductivité électrique, des additifs pour augmenter la résistance à l'abrasion, des additifs réduisant le frottement, des agents d'avivage, des auxiliaires de traitement, des agents adoucissants, des lubrifiants, des agents matants, des modificateurs de viscosité, des accélérateurs de cristallisation ou des combinaisons de deux ou plusieurs de ces additifs.

10. Structure plane textile contenant des filaments selon au moins l'une des revendications 1 à 9, en particulier sous la forme d'un tissu, d'un tricot maille, d'un tricot chaîne, d'une tresse ou d'une nappe.

11. Utilisation de monofilaments selon au moins l'une des revendications 1 à 9 comme habillage de machine à papier, dans des bandes transporteuses et dans des tamis de filtration.

12. Utilisation selon la revendication 11, **caractérisée en ce que** l'habillage de machine à papier est utilisé dans la partie de formation de la feuille et/ou dans la partie sèche de la machine à papier.
